# EUROPÄISCHE PATENTSCHRIFT

(11) **EP 1 454 979 B1**
(45) Veröffentlichungstag und Bekanntmachung des Hinweises auf die Patenterteilung: **11.05.2005**
(21) Anmeldenummer: 04003832.5
(22) Anmeldetag: 20.02.2004
(51) Int. Cl.: C12G 1/026

(54) **Behälter zur Behandlung von Rotweinmaische**
Container for treating red wine mash
Conteneur pour le traitement de moût de vendange rouge

(30) Priorität: 04.03.2003 DE 20303448 U
(43) Veröffentlichungstag der Anmeldung: 08.09.2004
(73) Patentinhaber: Speidel Tank- und Behälterbau GmbH, 72131 Ofterdingen (DE)
(72) Erfinder: Speidel, Fabian, Dipl. Ing. Maschinenbau, 72131 Ofterdingen (DE); Sulz, Ernst, 72131 Ofterdingen (DE)
(74) Vertreter: Patentanwälte Möll und Bitterich

(56) Entgegenhaltungen:
- EP-A- 0 916 723
- DE-A- 10 103 002
- DE-A- 10 123 065
- DE-A- 19 517 937
- DE-U- 29 915 659

## Beschreibung

Die Erfindung betrifft einen Behälter zur Behandlung von Rotweinmaische gemäß dem Oberbegriff des Patentanspruchs1.

Bei der Herstellung von Rotwein werden die Trauben nach der Ernte in der Regel von den Stielen entfernt und anschließend gequetscht. Im Gegensatz zur Herstellung von Weißwein verbleiben beim anschließenden Gärungsprozess des Rotweins die Traubenreste im Traubensaft. Diese sogenannte Maischegärung ist nach wie vor das klassische Verfahren zur Herstellung von Rotwein.

Der Maischeprozess, d. h. das Einweichen der festen Traubenbestandteile in der Flüssigkeit, bewirkt die Abgabe von Phenolen, insbesondere von Tanninen und Aromen, an den gärenden Traubensaft, die den Duft und den Geschmack des Weines bestimmen. Des weiteren werden durch das Verfahren die für die Farbe des Rotweins charakteristischen Farbstoffe, die sich vorwiegend in den Beerenhäuten befinden, extrahiert.

Da die Maische ein inhomogenes Gemisch aus Stoffen unterschiedlicher Dichte ist, neigt sie zur Entmischung, wobei die festen Bestandteile, die sogenannten Trester, aufschwimmen. Dieser Vorgang wird durch die bei der Maischegärung frei werdende Kohlensäure verstärkt. Durch die Berührung mit Luftsauerstoff oxidiert dieser sogenannte "Tresterhut", trocknet durch Erwärmung infolge der Gärung aus und verhärtet, wodurch Geschmack und Farbe des Weins ungünstig beeinflußt werden können. Um die Bildung eines Tresterhutes oder Tresterkuchens zu vermeiden und um eine optimale Diffusion des Farbstoffes zu erreichen, muss die Maische regelmäßig durchmischt werden. Diese Durchmischung sollte behutsam erfolgen, damit möglichst wenig Trub entsteht.

Bei der offenen Maischegärung, die auch heute noch in kleineren Betrieben praktiziert wird, ist es üblich, den Tresterhut von Hand einzustoßen. Dies gewährleistet zwar den schonenden Umgang mit der Maische, da dabei keine Verletzung der Beerenhäute und keine Reibung der Traubenkerne eintreten, somit nur ein minimaler Anteil von Trubstoffen entsteht; die Nachteile und Schwachpunkte dieses Verfahrens liegen aber in der Gefahr, dass der Wein durch Oxidieren des Tresterhutes einen Essigstich erhalten kann und dass Alkoholverluste entstehen können. Hinzu kommt die arbeitsintensive Belastung über mehrere Tage.

Daher hat sich weitgehend die Maischegärung in geschlossenen Behältern oder Tanks durchgesetzt. Es ist hierbei üblich, die in den Behältern gelagerte Maische durch herabsenkbare Tauchelemente zu durchmischen bzw. den sich mit der Zeit auf der Maische bildenden Tresterhut mit diesen Tauchelementen nach unten zu drücken und unter die Maische zu mischen.

In diesem Zusammenhang ist ein Behälter mit einem Tauchelement mit frei verschwenkbaren Flügeln bekannt, das mittels einer Zylinder-Kolben-Einheit in vertikaler Richtung in dem Behälter auf und ab bewegt wird (DE 299 15 659 U1). Da die Zylinder-Kolben-Einheit oberseitig auf dem Behälter befestigt ist, wird die Bauhöhe des Behälters durch diese Hubvorrichtung wesentlich höher als bei herkömmlichen Gärbehältern. Zudem ist die Eintauchtiefe dieses Elementes von der Länge der Kolbenstange abhängig. Dies bedeutet, dass sich zwangsläufig aus großen Eintauchtiefen auch hohe Zylindergehäuse ergeben, die für die üblichen Raumhöhen ungeeignet sind.

Vor diesem Hintergrund liegt der Erfindung die Aufgabe zugrunde, eine Möglichkeit zu schaffen, um die Bauhöhe von Behältern mit Maische-Mischvorrichtungen denjenigen herkömmlicher Gärbehälter anzupassen, ohne bei der Durchmischung der Maische Qualitätsverluste des Weins zu bewirken.

Diese Aufgabe wird durch einen Behälter zum Behandeln von Rotweinmaische mit den im Anspruch 1 angegebenen Merkmalen gelöst.

Vorteilhafte Weiterbildungen ergeben sich aus den Unteransprüchen.

Der Grundgedanke der Erfindung liegt darin, die Zylinder-Kolben-Einheit, durch die das Tauchelement auf und ab bewegt wird, im wesentlichen im Behälterinnern anzuordnen; auf dem Behälterdeckel kann allenfalls eine Zylinderabdeckung verbleiben. Dadurch wird einerseits bei gleichem Behälterinhalt die Gesamthöhe des Systems wesentlich verringert; andererseits ergibt sich die Möglichkeit, bei vorgegebenen Raumverhältnissen Behälter mit einem weitaus größeren Gesamtinhalt verwenden zu können als bei dem bekannten System, bei dem der Zylinder den Behälter überragt.

Eine Mischvorrichtung für Maische, deren Bauhöhe etwa derjenigen eines Standard-Weintanks entspricht, ist zwar aus der DE 101 23 065 A1 bekannt; diese bietet jedoch keine qualitativ zufriedenstellende Lösung. Bei dieser Vorrichtung wird ein mit Tauchflügeln versehener Tauchteller über eine im Innern des Maischetanks angeordnete Führungsstange in Form einer Spindel mit Trapezgewinde in vertikaler Richtung auf und ab bewegt. Diese Führungsstange wird von einem Antriebsmotor angetrieben, der auf oder unter dem Maischetank angeordnet ist. Diese Antriebsart ist nicht nur aufwändig und kostenintensiv; sie hat vor allem den Nachteil, dass sich Traubenkerne und andere feste Bestandteile der Maische zwischen dem Gewinde der Führungsstange und dem Führungselement des Tauchtellers absetzen können und bei den Auf- und Abbewegungen des Tauchtellers zerquetscht werden. Dabei geraten ungewollt und unkontrolliert Bitterstoffe in den Wein, so dass Qualitätsverluste nicht zu vermeiden sind. Durch die Führungen und das Spindel-System entstehen Schmutzecken, die nur sehr schwer zu reinigen sind und Bakterienherde darstellen können.

Gemäß der Erfindung ist das Tauchelement über eine zusätzliche Tragkonstruktion an der Kolbenstange der Hubvorrichtung befestigt, durch welche ein Höhenausgleich bewirkt und das Tauchelement im Ruhezustand oberhalb des Füllstandes des Behälterinhalts positioniert werden kann. Die Höhe der Tragkonstruktion ist der Höhe des Behälters und der Zylinder-Kolben-Einheit angepasst.

Da das Tauchelement klemmend an der Tragkonstruktion befestigt ist, ergibt sich die Möglichkeit, dessen Ausgangsposition vor dem ersten Hubvorgang zu variieren. Ist der Behälter voll gefüllt, wird das Tauchelement am oberen Ende der Tragkonstruktion angebracht, so dass es sich bei eingefahrener Kolbenstange am oberen Behälterrand befinden. Bei einem nur teilweise gefüllten Behälter kann das Tauchelement an eine entsprechende Stelle an der Tragkonstruktion verschoben werden. Bei Betätigung der Zylinder-Kolben-Einheit wird in beiden Fällen derselbe Durchmischungseffekt bewirkt.

Die Ummantelung der Zylinder-Kolben-Einheit und deren Abdichtung am Durchtritt der Kolbenstange gewährleisten, dass die Antriebseinheit vollständig gegen das umgebende Medium abgeschirmt ist. Ein Dichtsystem gewährleistet den sicheren Betrieb der Zylinder-Kolben-Einheit.

Das schonende Eintauchen des Tresterhutes wird in Abhängigkeit vom Gärprozess gesteuert. Dies kann je nach Bedarf manuell oder vollautomatisch erfolgen. Im Rahmen der Erfindung können dabei die unterschiedlichsten Tauchelemente verwendet werden; bekannt sind unter anderem Tauchelemente in Form von Wagenrädern, Sieben oder Gittern.

Als besonders vorteilhaft haben sich jedoch Tauchelemente mit mehreren um eine vertikale Achse schwenkbaren Paddeln oder Flügeln erwiesen, weil dadurch auf einen zusätzlichen Drehmotor verzichtet werden kann. Beim Herunterfahren der Kolbenstange drücken die Flügel der Tauchelemente den Tresterhut mit ihrer vollen Fläche in die Maische. Beim Hochfahren der Kolbenstange schwenken die Flügel aufgrund ihrer Form in eine Schräglage, erzeugen dabei eine Kraftkomponente in Umfangsrichtung und bewirken dadurch eine Drehung des gesamten Tauchelementes mit der Tragkonstruktion um die Zylinderachse. Dadurch befindet sich das Tauchelement nach Beendigung eines Hubvorganges in der optimalen Ausgangsposition für einen nachfolgenden Tauchvorgang.

Vorteilhafterweise kann die Vorrichtung zum Herunterdrücken des Tresterkuchens und zur Durchmischung der Maische leicht demontiert und aus dem Behälter herausgenommen werden. Dadurch läßt sich der Behälter ohne großen Aufwand in einen Standard-Weintank umwandeln.

Die Erfindung wird nachstehend anhand des in der Zeichnung dargestellten Ausführungsbeispiels näher erläutert. Es zeigt
- Fig. 1a: einen schematischen Schnitt durch einen kreiszylindrischen, stehenden Behälter mit einer erfindungsgemäßen Vorrichtung in der Ausgangsposition,
- Fig. 1b: einen schematischen Schnitt durch einen kreiszylindrischen, stehenden Behälter mit einer erfindungsgemäßen Vorrichtung bei ausgefahrener Kolbenstange der Zylinder-Kolben-Einheit,
- Fig. 2: einen Querschnitt entlang der Linie A-A durch den Behälter und
- Fig. 3: eine isometrische Ansicht der Zylinder-Kolben-Einrichtung mit dem Tauchelement.

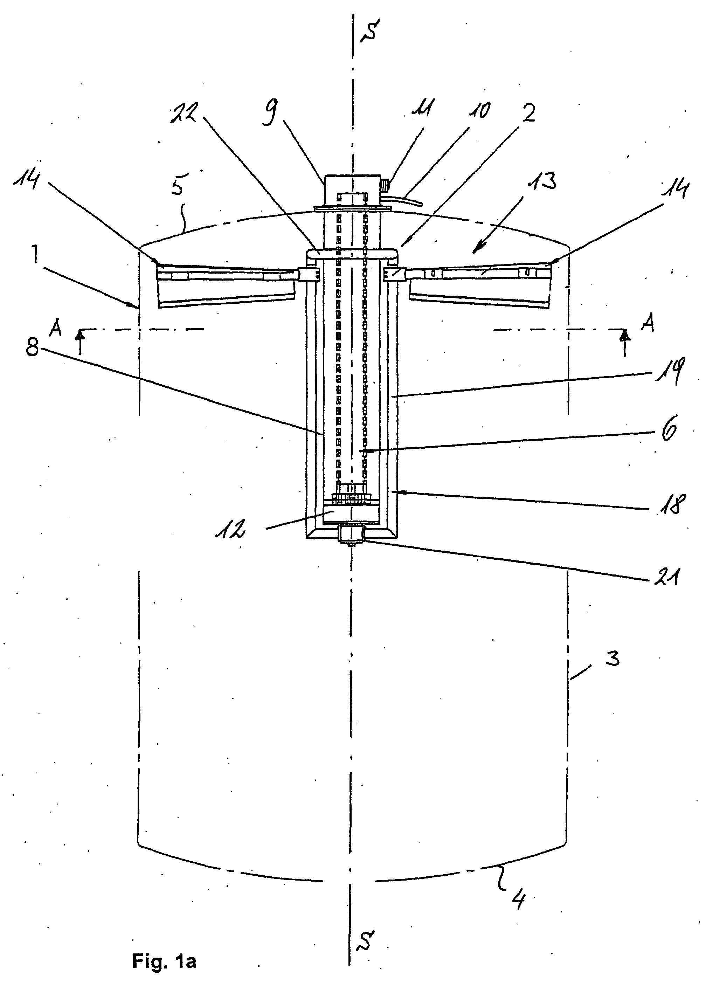

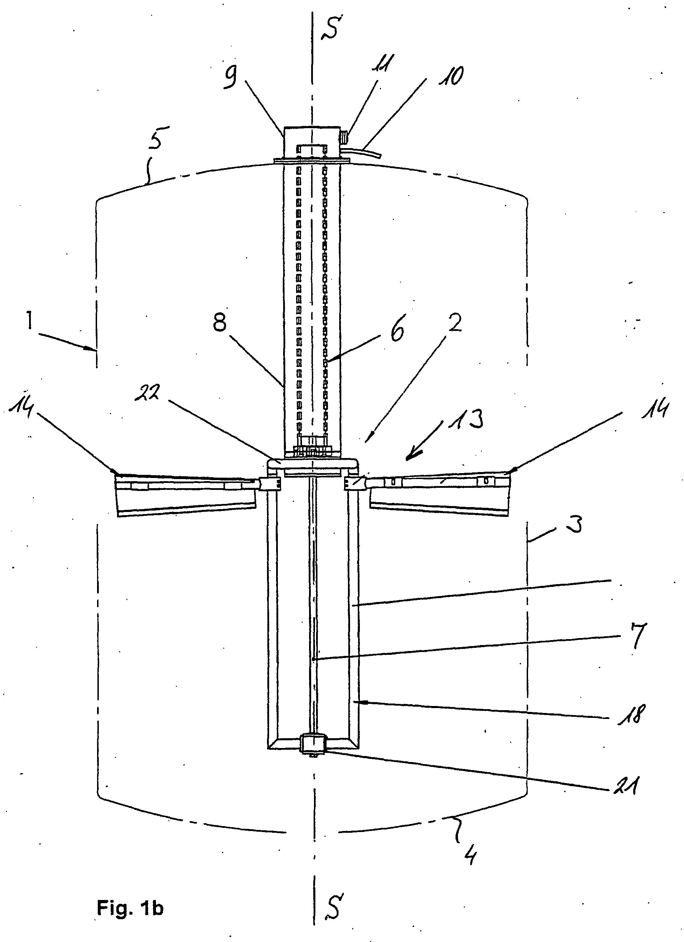

In den Fig. 1a und Fig. 1b ist jeweils ein vertikaler Schnitt durch einen Behälter 1 zur Behandlung von Rotweinmaische mit einer Vorrichtung zum Herunterdrücken des Tresterkuchens und zur Durchmischung der Maische dargestellt, die insgesamt mit 2 bezeichnet ist. Der Behälter 1, der meist kreiszylindrisch mit einer zylindrischen Wand 3, einem Behälterboden 4 und einem Behälterdeckel 5 ausgebildet ist, ist in der Darstellung nur schematisch angedeutet; auf die Darstellung üblicher Ausstattungen wie Standbeine, Ausbringvorrichtung, Mannloch mit Deckel, Schieber oder Ähnliches wurde verzichtet. Fig. 1a zeigt die Vorrichtung 2 zum Herunterdrücken des Tresterkuchens und zur Durchmischung der Maische ist in der Ausgangsposition, Fig. 1b dieselbe Vorrichtung in ausgefahrenem Zustand.

Die Vorrichtung 2 zur Durchmischung der Maische besteht aus einer zur Behälterachse S-S koaxial angeordneten, zweckmäßig pneumatisch betätigten Zylinder-Kolben-Einheit 6 mit einer Kolbenstange 7, die über einen wesentlichen Teil ihrer Länge im Innern des Behälters 1 angeordnet ist. Die Zylinder-Kolben-Einheit 6 ist im Innern des Behälters 1 durch eine Ummantelung 8 geschützt, die an der Oberseite des Behälters 1 durch eine Abdeckhaube 9 mit einem Anschluss für Druckluft 10 und einem Druckausgleichsventil 11 abgeschlossen ist. Am unteren Ende der Ummantelung 8 ist innen ein Befestigungsflansch 12 angeordnet, der ein Abdichtsystem für die ihn durchdringende Kolbenstange 7 enthält, das nicht im einzelnen dargestellt ist.

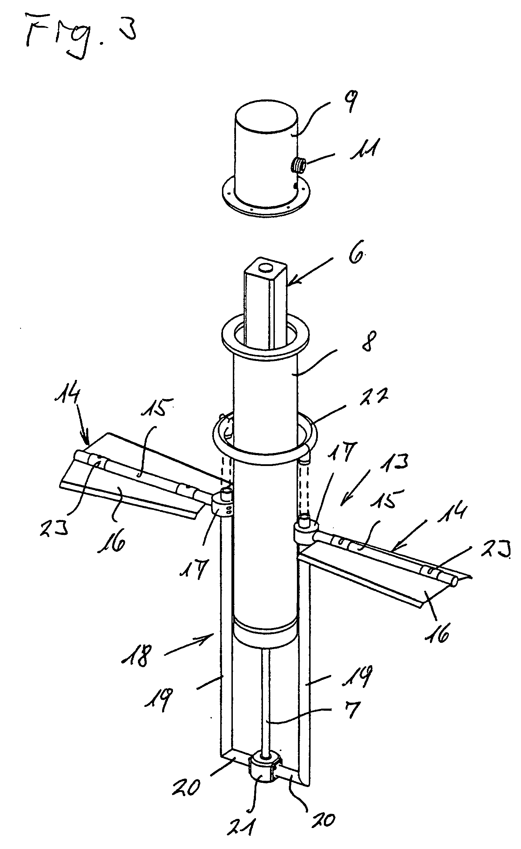

Wie insbesondere Fig. 3 zeigt, besteht das im Inneren des Behälters 1 angeordnete Tauchelement 13 im dargestellten Ausführungsbeispiel aus zwei Tauchflügeln 14, die radial zueinander und einander gegenüberliegend angeordnet sind. Jeder Tauchflügel 14 umfasst einen Radialstab 15, ein um diesen schwenkbares Flügelteil 16 und eine Klemmeinheit 17, mittels der der Tauchflügel 14 an einer Tragkonstruktion 18 befestigt ist. Bei größeren Behälterdurchmessern sind auch drei oder mehr Tauchflügel 14 sowie auch mehrere Zylinder-Kolben-Einheiten 6 mit entsprechenden Vorrichtungen 2 denkbar.

Die Tragkonstruktion 18 besteht aus zwei zur Behälterachse S-S parallelen Längsstäben 19, die jeweils über einen Steg 20 an einem Drehlager 21 biegesteif angeschlossen und über dieses mit der Kolbenstange 7 der Zylinder-Kolben-Einheit 6 verbunden sind. Mit Hilfe des Drehlagers 21 kann die gesamte Tragkonstruktion 18 um die Behälterachse S-S rotieren. Zur Stabilisierung der Tragkonstruktion 18 ist an ihrem oberen Ende ein zusätzlicher Verstärkungsring 22 vorgesehen. Falls andere Tauchelemente zum Einsatz kommen, kann die Tragkonstruktion 18 den jeweiligen Erfordernissen angepasst werden.

Die zum Bestreichen des gesamten Behälterquerschnitts erforderliche Drehbewegung der Vorrichtung 2 wird durch die Form der Flügel 16 und deren Lagerung an den Radialstäben 15 bewirkt. Die Flügel 16 sind mit Hilfe von Rohrbuchsen 23 in einem Bereich von etwa 45° schwenkbar an den Radialstäben 15 gelagert. Aufgrund ihres Eigengewichts nehmen die Flügel 16 oberhalb des Maischespiegels eine Schrägstellung von etwa 45° ein (Fig. 1a). Beim Auftreffen auf die Maische klappen die Flügel 16 aufgrund des Widerstandes nach oben und legen sich flach auf die Oberfläche des Behälterinhalts. In dieser Lage wird die Tragkonstruktion 18 mit den Flügeln 16 durch Ausfahren der Kolbenstange 7 in die Maische abgesenkt und diese dadurch durchmischt. Beim Hochfahren der Kolbenstange 7 klappen die Flügel 16 durch ihre Gewichtskraft und die Umströmung durch die Maische wieder nach unten (Fig. 1b). Hierbei wird eine Kraftkomponente in Umfangsrichtung erzeugt, die die Drehung der gesamten Tragkonstruktion 18 bewirkt. Dadurch ist das Eintauchen der Flügel 16 an in Umfangsrichtung versetzten Positionen und somit die Durchmischung des gesamten Tresterkuchens gewährleistet.

Mit Hilfe der Klemmeinheiten 17 können die Tauchflügel 14 in beliebiger Höhe an der Tragkonstruktion 18 positioniert werden. Dadurch wird unterschiedlichen Füllständen im Behälter Rechnung getragen, so dass auch geringere Maischemengen sorgfältig durchmischt werden können. Dadurch ist die Eintauchtiefe der Tauchflügel 14 nicht auf den Hubweg der Zylinder-Kolben-Einheit 6 beschränkt.

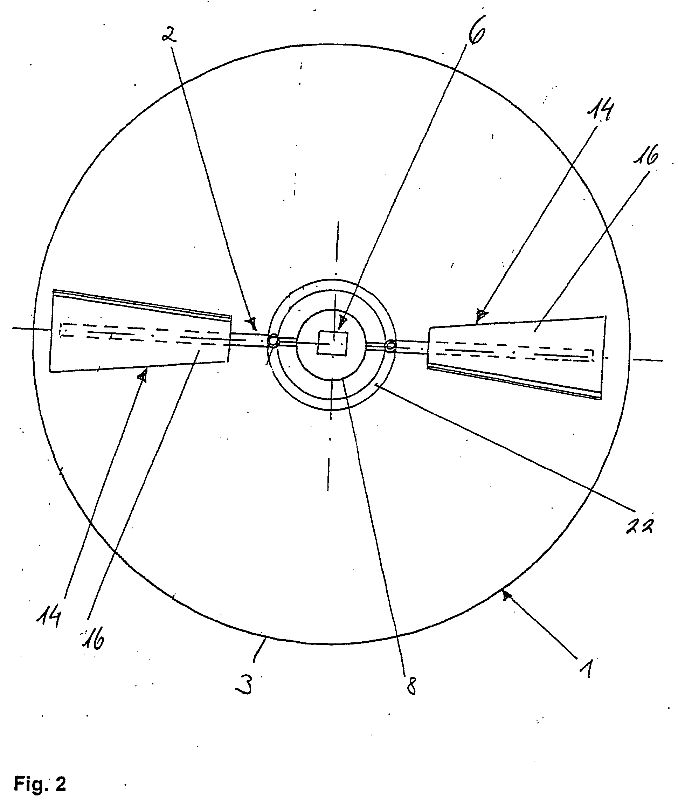

Fig. 2 zeigt einen Querschnitt entlang der Linie A-A durch den Behälter 1. Die beiden Tauchflügel 14 liegen in einer Flucht. Falls beispielsweise bei einem größeren Behälter drei oder mehr Tauchflügel 14 vorgesehen werden, können die Radialstäbe 15 jeweils unter Winkeln von 120° bzw. 90° einer entsprechenden Anzahl von Längsstäben 19 und Stegen 20 an dem Drehlager 21 befestigt werden.

## Patentansprüche

1. Behälter zur Behandlung von Rotweinmaische mit einer Vorrichtung (2) zum Untertauchen des Tresterkuchens und zur Durchmischung der Maische, die im wesentlichen eine Zylinder-Kolben-Einheit (6) und ein Tauchelement 13) umfaßt, das mittels der Kolbenstange (7) in den Behälterinhalt absenkbar ist, **dadurch gekennzeichnet, dass**
die Zylinder-Kolben-Einheit (6) zumindest im wesentlichen im Behälterinnern angeordnet ist
und dass das Tauchelement (13) mittels einer die Eintauchtiefe der Zylinder-Kolben-Einheit (6) ausgleichenden Tragkonstruktion (18) mit der Kolbenstange (7) verbunden ist.

2. Behälter gemäß Anspruch 1 **dadurch gekennzeichnet, dass** die Tragkonstruktion (18) für das Tauchelement (13) drehbar an der Kolbenstange (7) des Zylinders gelagert ist.

3. Behälter gemäß Anspruch 1 und 2, **dadurch gekennzeichnet, dass** das Tauchelement (13) höhenverstellbar an der Tragkonstruktion (18) befestigt ist.

4. Behälter gemäß Anspruch 3, **dadurch gekennzeichnet, dass** das Tauchelement (13) mittels Klemmverbindung an der Tragkonstruktion (18) befestigt ist.

5. Behälter gemäß einem der Ansprüche 1 bis 4, **dadurch gekennzeichnet, dass** das Tauchelement (13) mindestens einen radial zur Zylinder-Kolben-Einheit (6) angeordneten Tauchflügel (14) umfasst.

6. Behälter gemäß einem der Ansprüche 1 bis 5, **dadurch gekennzeichnet, dass** die Tragkonstruktion (18) mindestens einen parallel zur Zylinder-Kolben-Einheit (6) verlaufenden Längsstab (19) umfasst, der an seinem unteren Ende mit der Kolbenstange (7) verbunden ist und an dem jeweils ein Tauchflügel (14) längsverschieblich angeordnet ist.

7. Behälter gemäß einem der Ansprüche 1 bis 6, **dadurch gekennzeichnet, dass** die Zylinder-Kolben-Einheit (6) durch eine Ummantelung (8) gegen das umgebende Medium geschützt ist.

8. Behälter gemäß einem der Ansprüche 1 bis 7, **dadurch gekennzeichnet, dass** die Ummantelung (8) des Zylinders im Bereich des Durchtritts der Kolbenstange (7) abgedichtet ist.

9. Behälter gemäß einem der Ansprüche 1 bis 8, **dadurch gekennzeichnet, dass** die Tragkonstruktion (18) mindestens zwei parallel zur Zylinder-Kolben-Einheit (6) verlaufende Längsstäbe (19) umfasst, die an ihren unteren Enden jeweils durch einen radialen Steg (20) mit einem am unteren Ende der Kolbenstange (7) angeordneten Drehlager (21) verbunden sind.

10. Behälter gemäß Anspruch 9, **dadurch gekennzeichnet, dass** die Längsstäbe (19) an ihren oberen Enden durch eine die Zylinder-Kolben-Einheit (6) bzw. deren Ummantelung (8) umgreifenden Verstärkungsring (22) miteinander verbunden sind.

## Claims

1. A container for treating red wine must with a device (2) for the immersion of a marc cake and for the intermixing of the must, which device substantially comprises a piston-cylinder unit (6) and a submersible element (13) which can be lowered into the contents of the container by means of a piston rod (7),
**characterised in that**
the piston-cylinder unit (6) is disposed at least substantially in the interior of the container and **in that** the submersible element (13) is connected to the piston rod (7) by means of a support structure (18) compensating for the immersion depth of the piston-cylinder unit (6).

2. A container according to Claim 1, **characterised in that** the support structure (18) for the submersible element (13) is mounted rotatably on the piston rod (7) of the cylinder.

3. A container according to Claim 1 or 2, **characterised in that** the submersible element (13) is mounted vertically adjustably on the support structure (18).

4. A container according to Claim 3, **characterised in that** the submersible element (13) is secured to the support structure (18) by means of a clamped connection.

5. A container according to any one of Claims 1 to 4, **characterised in that** the submersible element (13) comprises at least one submersible paddle (14) disposed radially to the piston-cylinder unit (6).

6. A container according to any one of Claims 1 to 5, **characterised in that** the support structure (18) comprises at least one longitudinal rod (19) which extends parallel to the piston-cylinder unit (6) and which at its lower end is connected to the piston rod (7) and is mounted longitudinally displaceably on the respective submersible paddle (14).

7. A container according to any one of Claims 1 to 6, **characterised in that** the piston-cylinder unit (6) is protected from the surrounding medium by an outer casing (8).

8. A container according to any one of Claims 1 to 7, **characterised in that** the outer casing (8) of the cylinder is sealed in the vicinity of the passage the piston rod (7).

9. A container according to any one of Claims 1 to 8, **characterised in that** the support structure (18) comprises at least two longitudinal rods (19) which extend parallel to the piston-cylinder unit (6) and which at their lower ends are each connected by a radial web (20) to a pivot bearing (21) provided at the lower end of the piston rod (7).

10. A container according to Claim 9, **characterised in that** the longitudinal rods (19) are joined together at their upper ends by a strengthening ring (22) embracing the piston-cylinder unit (6) and/or its outer casing (18).

## Revendications

1. Cuve de traitement du moût de vin rouge comportant un dispositif (2) destiné à immerger le chapeau de marc et à mélanger le moût, lequel comporte pour l'essentiel une unité de cylindre et piston (6) et un élément pigeur (13), qui peut être enfoncé dans le contenu de la cuve au moyen de la tige de piston (7), **caractérisée en ce que** l'unité de cylindre et piston (6) est agencée au moins pour l'essentiel à l'intérieur de la cuve et **en ce que** l'élément pigeur (13) est relié à la tige de piston (7) au moyen d'un châssis de support (18) égalisant la profondeur d'immersion de l'unité de cylindre et piston (6).

2. Cuve selon la revendication 1, **caractérisée en ce que** le châssis de support (18) de l'élément pigeur (13) est monté rotatif sur la tige de piston (7) du vérin.

3. Cuve selon les revendications 1 et 2, **caractérisée en ce que** l'élément pigeur (13) est fixé de manière réglable en hauteur sur le châssis de support (18).

4. Cuve selon la revendication 3, **caractérisée en ce que** l'élément pigeur (13) est fixé contre le châssis de support (18) au moyen d'un assemblage collé.

5. Cuve selon l'une quelconque des revendications 1 à 4, **caractérisée en ce que** l'élément pigeur (13) comporte au moins une pale de pigeage (14) agencée radialement par rapport à l'unité de cylindre et piston (6).

6. Cuve selon l'une quelconque des revendications 1 à 5, **caractérisée en ce que** le châssis de support (18) comporte au moins une barre longitudinale (19), qui est parallèle à l'unité de cylindre et piston (6) et qui est reliée à son extrémité inférieure à la tige de piston (7) et est agencée de manière mobile longitudinalement sur respectivement une pale de pigeage (14).

7. Cuve selon l'une quelconque des revendications 1 à 6, **caractérisée en ce que** l'unité de cylindre et piston (6) est protégée contre le milieu environnant par une gaine (8).

8. Cuve selon l'une quelconque des revendications 1 à 7, **caractérisée en ce que** la gaine (8) du vérin est rendue étanche dans la zone de passage de la tige de piston (7).

9. Cuve selon l'une quelconque des revendications 1 à 8, **caractérisée en ce que** le châssis de support (18) comporte au moins deux barres longitudinales (19), qui sont parallèles à l'unité de cylindre et piston (6) et qui sont reliées au niveau de leur extrémité inférieure chacune par une traverse radiale (20) avec un palier rotatif (21) agencé sur l'extrémité inférieure de la tige de piston (7).

10. Cuve selon la revendication 9, **caractérisée en ce que** les barres longitudinales (19) sont reliées entre elles au niveau de leur extrémité supérieure par une bague de renfort (22) entourant l' unité de cylindre et piston (6) ou la gaine (8) de celle-ci.
